# EUROPEAN PATENT APPLICATION

(11) **EP 4 149 074 A1**
(43) Date of publication of application: **15.03.2023**
(21) Application number: 22194113.1
(22) Date of filing: 06.09.2022
(51) Int. Cl.: H04L 41/042, H04L 41/0895, H04L 41/342, H04L 41/5025

(54) **SLICE CONFIGURATION ACROSS OPERATIONS TECHNOLOGY AND NETWORK DOMAINS**

(30) Priority: 13.09.2021 US 202163243537 P
(71) Applicant: Nokia Solutions and Networks Oy, 02610 Espoo (FI)
(72) Inventor: SANNECK, Henning, 81549 München (DE); ALI-TOLPPA, Janne, 33950 Pirkkala (FI)
(74) Representative: Nokia EPO representatives

(57) **Abstract**

Various example embodiments for supporting communications management may be configured to support communications management for an operations technology (OT) domain that uses an associated network domain for supporting communications of the OT domain. Various example embodiments for supporting communications management for an OT domain that uses an associated network domain for supporting communications of the OT domain may be configured to support such communications management based on slice management capabilities. Various example embodiments for supporting communications management for an OT domain that uses an associated network domain for supporting communications of the OT domain, based on slice management capabilities, may be configured to support such communications management based on support for slice configuration across the OT domain and the network domain.

## Description

### CROSS-REFERENCE TO RELATED APPLICATIONS

This application claims the benefit of U.S. Provisional Patent Application Serial No. 63/243,537, filed on September 13, 2021, which is hereby incorporated herein by reference in its entirety.

### TECHNICAL FIELD

Various example embodiments relate generally to communications and, more particularly but not exclusively, to management of communications in systems as well as communication networks that support those systems.

### BACKGROUND

Various types of systems may include various types of communications which may be supported using various types of communication networks. As systems and communication networks evolve and scale to meet increasing demands of various types of communications of various types of systems, management of such systems and communication networks may be adapted to ensure that the systems, as well as the communications networks that support those systems, continue to reliably and efficiently handle the communications of such systems.

### SUMMARY

In at least some example embodiments, an apparatus includes at least one processor and at least one memory storing instructions that, when executed by the at least one processor, cause the apparatus to at least detect a condition associated with an operations technology (OT) domain including a set of OT networked entities and a set of OT domain network resources, the condition being associated with a first OT networked entity, determine, based on a location of the first OT networked entity and the set of OT domain network resources, a set of network requirements of the first OT networked entity, determine an OT domain slice configured to support the set of network requirements of the first OT networked entity at the location of the first OT networked entity, and send, toward a cellular network domain based on the OT domain slice, a request for a cellular network slice configured to support the set of network requirements of the first OT networked entity at the location of the first OT networked entity. In at least some example embodiments, the condition includes a condition which triggers a configuration of the OT domain or a reconfiguration of the OT domain. In at least some example embodiments, the condition includes at least one of an addition of a new OT networked entity to the OT domain, a movement of an existing OT networked entity within the OT domain, a removal of an existing OT networked entity from the OT domain, or a change in a set of OT network resources of the OT domain. In at least some example embodiments, the instructions, when executed by the at least one processor, cause the apparatus to at least determine, based on a computation of an OT domain system delta configuration, the location of the first OT networked entity. In at least some example embodiments, the computation of the OT domain system delta configuration is based on a current OT domain system configuration and the condition associated with the OT domain. In at least some example embodiments, the location of the first OT networked entity includes a native cellular location or area or a combined cellular and time sensitive networking location or area. In at least some example embodiments, to determine the set of network requirements of the first OT networked entity, the instructions, when executed by the at least one processor, cause the apparatus to at least determine, from the set of OT domain network resources based on the location of the first OT networked entity, a subset of OT domain network resources associated with the location of the first OT networked entity, determine, based on the subset of OT domain network resources associated with the location of the first OT networked entity, a set of network requirements of the location of the first OT networked entity, and determine, based on the set of network requirements of the location of the first OT networked entity, the set of network requirements of the first OT networked entity. In at least some example embodiments, the set of network requirements of the location of the first OT networked entity are determined based on a set of network requirements of the subset of OT domain network resources associated with the location of the first OT networked entity. In at least some example embodiments, the set of OT domain network resources includes at least one of one or more network elements, one or more ports, one or more interfaces, one or more Layer 2 (L2) resources, or one or more Layer 3 (L3) resources. In at least some example embodiments, to determine the set of network requirements of the first OT networked entity, the instructions, when executed by the at least one processor, cause the apparatus to at least compute, based on the condition associated with the OT domain and a current OT domain system configuration, an OT domain system delta configuration including the location of the first OT networked entity, compute, based on the OT domain system delta configuration and a current OT domain network configuration, an OT domain network delta configuration indicative of a set of network requirements of subset of the OT domain network resources associated with the location of the first OT networked entity, initiate a deployment of the OT domain network delta configuration to the OT domain, and determine, based on the deployment of the OT domain network delta configuration to the OT domain, the set of network requirements of the first OT networked entity. In at least some example embodiments, the set of network requirements of the first OT networked entity is determined based on at least one of a current network configuration of the OT domain or network requirement information associated with the OT domain. In at least some example embodiments, the set of network requirements of the first OT networked entity includes at least one of a quality-of-service (QoS) requirement, an isolation requirement, or a prioritization requirement. In at least some example embodiments, to determine the OT domain slice configured to support the set of network requirements of the first OT networked entity, the instructions, when executed by the at least one processor, cause the apparatus to at least determine whether an existing OT domain slice satisfies the set of network requirements of the first OT networked entity. In at least some example embodiments, the instructions, when executed by the at least one processor, cause the apparatus to at least select, based on a determination that the existing OT domain slice satisfies the set of network requirements of the first OT networked entity, the existing OT domain slice for the first OT networked entity. In at least some example embodiments, the instructions, when executed by the at least one processor, cause the apparatus to at least define, based on a determination that no existing OT domain slice satisfies the set of network requirements associated with the location of the first OT networked entity, a new OT domain slice for the first OT networked entity based on an OT domain slice template. In at least some example embodiments, the instructions, when executed by the at least one processor, cause the apparatus to at least receive, from the cellular network domain, an indication of an association of the first OT networked entity with the cellular network slice. In at least some example embodiments, the instructions, when executed by the at least one processor, cause the apparatus to at least maintain a mapping between an OT domain slice identifier associated with the OT domain slice and a cellular network slice identifier associated with the cellular network slice. In at least some example embodiments, the instructions, when executed by the at least one processor, cause the apparatus to at least detect a condition associated with the first OT networked entity and initiate, based on the condition associated with the first OT networked entity, a reconfiguration of the OT domain. In at least some example embodiments, the condition associated with the first OT networked entity includes an indication that the first OT networked entity has moved outside of a predefined coverage area. In at least some example embodiments, the set of OT networked entities includes at least one of a machine, an autonomous guided vehicle (AGV), an Internet-of-Things (IoT) device, or a user equipment (UE).

In at least some example embodiments, a non-transitory computer readable medium includes program instructions that, when executed by an apparatus, cause the apparatus to at least detect a condition associated with an operations technology (OT) domain including a set of OT networked entities and a set of OT domain network resources, the condition being associated with a first OT networked entity, determine, based on a location of the first OT networked entity and the set of OT domain network resources, a set of network requirements of the first OT networked entity, determine an OT domain slice configured to support the set of network requirements of the first OT networked entity at the location of the first OT networked entity, and send, toward a cellular network domain based on the OT domain slice, a request for a cellular network slice configured to support the set of network requirements of the first OT networked entity at the location of the first OT networked entity. In at least some example embodiments, the condition includes a condition which triggers a configuration of the OT domain or a reconfiguration of the OT domain. In at least some example embodiments, the condition includes at least one of an addition of a new OT networked entity to the OT domain, a movement of an existing OT networked entity within the OT domain, a removal of an existing OT networked entity from the OT domain, or a change in a set of OT network resources of the OT domain. In at least some example embodiments, the program instructions, when executed by the apparatus, cause the apparatus to at least determine, based on a computation of an OT domain system delta configuration, the location of the first OT networked entity. In at least some example embodiments, the computation of the OT domain system delta configuration is based on a current OT domain system configuration and the condition associated with the OT domain. In at least some example embodiments, the location of the first OT networked entity includes a native cellular location or area or a combined cellular and time sensitive networking location or area. In at least some example embodiments, to determine the set of network requirements of the first OT networked entity, the program instructions, when executed by the apparatus, cause the apparatus to at least determine, from the set of OT domain network resources based on the location of the first OT networked entity, a subset of OT domain network resources associated with the location of the first OT networked entity, determine, based on the subset of OT domain network resources associated with the location of the first OT networked entity, a set of network requirements of the location of the first OT networked entity, and determine, based on the set of network requirements of the location of the first OT networked entity, the set of network requirements of the first OT networked entity. In at least some example embodiments, the set of network requirements of the location of the first OT networked entity are determined based on a set of network requirements of the subset of OT domain network resources associated with the location of the first OT networked entity. In at least some example embodiments, the set of OT domain network resources includes at least one of one or more network elements, one or more ports, one or more interfaces, one or more Layer 2 (L2) resources, or one or more Layer 3 (L3) resources. In at least some example embodiments, to determine the set of network requirements of the first OT networked entity, the program instructions, when executed by the apparatus, cause the apparatus to at least compute, based on the condition associated with the OT domain and a current OT domain system configuration, an OT domain system delta configuration including the location of the first OT networked entity, compute, based on the OT domain system delta configuration and a current OT domain network configuration, an OT domain network delta configuration indicative of a set of network requirements of subset of the OT domain network resources associated with the location of the first OT networked entity, initiate a deployment of the OT domain network delta configuration to the OT domain, and determine, based on the deployment of the OT domain network delta configuration to the OT domain, the set of network requirements of the first OT networked entity. In at least some example embodiments, the set of network requirements of the first OT networked entity is determined based on at least one of a current network configuration of the OT domain or network requirement information associated with the OT domain. In at least some example embodiments, the set of network requirements of the first OT networked entity includes at least one of a quality-of-service (QoS) requirement, an isolation requirement, or a prioritization requirement. In at least some example embodiments, to determine the OT domain slice configured to support the set of network requirements of the first OT networked entity, the program instructions, when executed by the apparatus, cause the apparatus to at least determine whether an existing OT domain slice satisfies the set of network requirements of the first OT networked entity. In at least some example embodiments, the program instructions, when executed by the apparatus, cause the apparatus to at least select, based on a determination that the existing OT domain slice satisfies the set of network requirements of the first OT networked entity, the existing OT domain slice for the first OT networked entity. In at least some example embodiments, the program instructions, when executed by the apparatus, cause the apparatus to at least define, based on a determination that no existing OT domain slice satisfies the set of network requirements associated with the location of the first OT networked entity, a new OT domain slice for the first OT networked entity based on an OT domain slice template. In at least some example embodiments, the program instructions, when executed by the apparatus, cause the apparatus to at least receive, from the cellular network domain, an indication of an association of the first OT networked entity with the cellular network slice. In at least some example embodiments, the program instructions, when executed by the apparatus, cause the apparatus to at least maintain a mapping between an OT domain slice identifier associated with the OT domain slice and a cellular network slice identifier associated with the cellular network slice. In at least some example embodiments, the program instructions, when executed by the apparatus, cause the apparatus to at least detect a condition associated with the first OT networked entity and initiate, based on the condition associated with the first OT networked entity, a reconfiguration of the OT domain. In at least some example embodiments, the condition associated with the first OT networked entity includes an indication that the first OT networked entity has moved outside of a predefined coverage area. In at least some example embodiments, the set of OT networked entities includes at least one of a machine, an autonomous guided vehicle (AGV), an Internet-of-Things (IoT) device, or a user equipment (UE).

In at least some example embodiments, a method includes detecting a condition associated with an operations technology (OT) domain including a set of OT networked entities and a set of OT domain network resources, the condition being associated with a first OT networked entity, determining, based on a location of the first OT networked entity and the set of OT domain network resources, a set of network requirements of the first OT networked entity, determining an OT domain slice configured to support the set of network requirements of the first OT networked entity at the location of the first OT networked entity, and sending, toward a cellular network domain based on the OT domain slice, a request for a cellular network slice configured to support the set of network requirements of the first OT networked entity at the location of the first OT networked entity. In at least some example embodiments, the condition includes a condition which triggers a configuration of the OT domain or a reconfiguration of the OT domain. In at least some example embodiments, the condition includes at least one of an addition of a new OT networked entity to the OT domain, a movement of an existing OT networked entity within the OT domain, a removal of an existing OT networked entity from the OT domain, or a change in a set of OT network resources of the OT domain. In at least some example embodiments, the method includes determining, based on a computation of an OT domain system delta configuration, the location of the first OT networked entity. In at least some example embodiments, the computation of the OT domain system delta configuration is based on a current OT domain system configuration and the condition associated with the OT domain. In at least some example embodiments, the location of the first OT networked entity includes a native cellular location or area or a combined cellular and time sensitive networking location or area. In at least some example embodiments, determining the set of network requirements of the first OT networked entity includes determining, from the set of OT domain network resources based on the location of the first OT networked entity, a subset of OT domain network resources associated with the location of the first OT networked entity, determining, based on the subset of OT domain network resources associated with the location of the first OT networked entity, a set of network requirements of the location of the first OT networked entity, and determining, based on the set of network requirements of the location of the first OT networked entity, the set of network requirements of the first OT networked entity. In at least some example embodiments, the set of network requirements of the location of the first OT networked entity are determined based on a set of network requirements of the subset of OT domain network resources associated with the location of the first OT networked entity. In at least some example embodiments, the set of OT domain network resources includes at least one of one or more network elements, one or more ports, one or more interfaces, one or more Layer 2 (L2) resources, or one or more Layer 3 (L3) resources. In at least some example embodiments, determining the set of network requirements of the first OT networked entity includes computing, based on the condition associated with the OT domain and a current OT domain system configuration, an OT domain system delta configuration including the location of the first OT networked entity, computing, based on the OT domain system delta configuration and a current OT domain network configuration, an OT domain network delta configuration indicative of a set of network requirements of subset of the OT domain network resources associated with the location of the first OT networked entity, initiating a deployment of the OT domain network delta configuration to the OT domain, and determining, based on the deployment of the OT domain network delta configuration to the OT domain, the set of network requirements of the first OT networked entity. In at least some example embodiments, the set of network requirements of the first OT networked entity is determined based on at least one of a current network configuration of the OT domain or network requirement information associated with the OT domain. In at least some example embodiments, the set of network requirements of the first OT networked entity includes at least one of a quality-of-service (QoS) requirement, an isolation requirement, or a prioritization requirement. In at least some example embodiments, determining the OT domain slice configured to support the set of network requirements of the first OT networked entity includes determining whether an existing OT domain slice satisfies the set of network requirements of the first OT networked entity. In at least some example embodiments, the method includes selecting, based on a determination that the existing OT domain slice satisfies the set of network requirements of the first OT networked entity, the existing OT domain slice for the first OT networked entity. In at least some example embodiments, the method includes defining, based on a determination that no existing OT domain slice satisfies the set of network requirements associated with the location of the first OT networked entity, a new OT domain slice for the first OT networked entity based on an OT domain slice template. In at least some example embodiments, the method includes receiving, from the cellular network domain, an indication of an association of the first OT networked entity with the cellular network slice. In at least some example embodiments, the method includes maintaining a mapping between an OT domain slice identifier associated with the OT domain slice and a cellular network slice identifier associated with the cellular network slice. In at least some example embodiments, the method includes detecting a condition associated with the first OT networked entity and initiating, based on the condition associated with the first OT networked entity, a reconfiguration of the OT domain. In at least some example embodiments, the condition associated with the first OT networked entity includes an indication that the first OT networked entity has moved outside of a predefined coverage area. In at least some example embodiments, the set of OT networked entities includes at least one of a machine, an autonomous guided vehicle (AGV), an Internet-of-Things (IoT) device, or a user equipment (UE).

In at least some example embodiments, an apparatus includes means for detecting a condition associated with an operations technology (OT) domain including a set of OT networked entities and a set of OT domain network resources, the condition being associated with a first OT networked entity, means for determining, based on a location of the first OT networked entity and the set of OT domain network resources, a set of network requirements of the first OT networked entity, means for determining an OT domain slice configured to support the set of network requirements of the first OT networked entity at the location of the first OT networked entity, and means for sending, toward a cellular network domain based on the OT domain slice, a request for a cellular network slice configured to support the set of network requirements of the first OT networked entity at the location of the first OT networked entity. In at least some example embodiments, the condition includes a condition which triggers a configuration of the OT domain or a reconfiguration of the OT domain. In at least some example embodiments, the condition includes at least one of an addition of a new OT networked entity to the OT domain, a movement of an existing OT networked entity within the OT domain, a removal of an existing OT networked entity from the OT domain, or a change in a set of OT network resources of the OT domain. In at least some example embodiments, the apparatus includes means for determining, based on a computation of an OT domain system delta configuration, the location of the first OT networked entity. In at least some example embodiments, the computation of the OT domain system delta configuration is based on a current OT domain system configuration and the condition associated with the OT domain. In at least some example embodiments, the location of the first OT networked entity includes a native cellular location or area or a combined cellular and time sensitive networking location or area. In at least some example embodiments, the means for determining the set of network requirements of the first OT networked entity includes means for determining, from the set of OT domain network resources based on the location of the first OT networked entity, a subset of OT domain network resources associated with the location of the first OT networked entity, means for determining, based on the subset of OT domain network resources associated with the location of the first OT networked entity, a set of network requirements of the location of the first OT networked entity, and means for determining, based on the set of network requirements of the location of the first OT networked entity, the set of network requirements of the first OT networked entity. In at least some example embodiments, the set of network requirements of the location of the first OT networked entity are determined based on a set of network requirements of the subset of OT domain network resources associated with the location of the first OT networked entity. In at least some example embodiments, the set of OT domain network resources includes at least one of one or more network elements, one or more ports, one or more interfaces, one or more Layer 2 (L2) resources, or one or more Layer 3 (L3) resources. In at least some example embodiments, the means for determining the set of network requirements of the first OT networked entity includes means for computing, based on the condition associated with the OT domain and a current OT domain system configuration, an OT domain system delta configuration including the location of the first OT networked entity, means for computing, based on the OT domain system delta configuration and a current OT domain network configuration, an OT domain network delta configuration indicative of a set of network requirements of subset of the OT domain network resources associated with the location of the first OT networked entity, means for initiating a deployment of the OT domain network delta configuration to the OT domain, and means for determining, based on the deployment of the OT domain network delta configuration to the OT domain, the set of network requirements of the first OT networked entity. In at least some example embodiments, the set of network requirements of the first OT networked entity is determined based on at least one of a current network configuration of the OT domain or network requirement information associated with the OT domain. In at least some example embodiments, the set of network requirements of the first OT networked entity includes at least one of a quality-of-service (QoS) requirement, an isolation requirement, or a prioritization requirement. In at least some example embodiments, the means for determining the OT domain slice configured to support the set of network requirements of the first OT networked entity includes means for determining whether an existing OT domain slice satisfies the set of network requirements of the first OT networked entity. In at least some example embodiments, the apparatus includes means for selecting, based on a determination that the existing OT domain slice satisfies the set of network requirements of the first OT networked entity, the existing OT domain slice for the first OT networked entity. In at least some example embodiments, the apparatus includes means for defining, based on a determination that no existing OT domain slice satisfies the set of network requirements associated with the location of the first OT networked entity, a new OT domain slice for the first OT networked entity based on an OT domain slice template. In at least some example embodiments, the apparatus includes means for receiving, from the cellular network domain, an indication of an association of the first OT networked entity with the cellular network slice. In at least some example embodiments, the apparatus includes means for maintaining a mapping between an OT domain slice identifier associated with the OT domain slice and a cellular network slice identifier associated with the cellular network slice. In at least some example embodiments, the apparatus includes means for detecting a condition associated with the first OT networked entity and means for initiating, based on the condition associated with the first OT networked entity, a reconfiguration of the OT domain. In at least some example embodiments, the condition associated with the first OT networked entity includes an indication that the first OT networked entity has moved outside of a predefined coverage area. In at least some example embodiments, the set of OT networked entities includes at least one of a machine, an autonomous guided vehicle (AGV), an Internet-of-Things (IoT) device, or a user equipment (UE).

### BRIEF DESCRIPTION OF THE DRAWINGS

The teachings herein can be readily understood by considering the following detailed description in conjunction with the accompanying drawings, in which:
FIG. 1 depicts an example embodiment of a system, including an operations technology (OT) domain and a cellular network domain, configured to support slice configuration across the OT domain and the cellular network domain;
FIGs. 2A - 2C depict an example embodiment of an OT domain for illustrating slice configuration across the OT domain and a cellular network domain supporting communications of the OT domain;
FIG. 3 depicts an example embodiment of a system, including an OT domain and a Fifth Generation (5G) network domain, configured to support slice configuration across the OT domain and the 5G network domain;
FIG. 4 depicts an example embodiment of a process flow configured to support slice configuration across an OT domain and a 5G network domain;
FIG. 5 depicts an example embodiment of a method for supporting slice configuration across an OT domain and a cellular network domain;
FIG. 6 depicts an example embodiment of a method for supporting slice configuration across an OT domain and a cellular network domain; and
FIG. 7 depicts an example embodiment of a computer suitable for use in performing various functions presented herein.

To facilitate understanding, identical reference numerals have been used herein, wherever possible, in order to designate identical elements that are common among the various figures.

### DETAILED DESCRIPTION

Various example embodiments for supporting communications management are presented herein. Various example embodiments for supporting communications management may be configured to support communications management for an operations technology (OT) domain that uses an associated network domain for supporting communications of the OT domain. Various example embodiments for supporting communications management for an OT domain that uses an associated network domain for supporting communications of the OT domain may be configured to support such communications management based on slice management capabilities. Various example embodiments for supporting communications management for an OT domain that uses an associated network domain for supporting communications of the OT domain, based on slice management capabilities, may be configured to support such communications management based on support for slice configuration across the OT domain and the network domain. Various example embodiments for supporting communications management for an OT domain that uses an associated network domain for supporting communications of the OT domain may be configured to support such communications management for various types of OT domains, such as enterprise production environments (e.g., having various networking resources, productions lines, production cells, machines including fixed machines and autonomous guided vehicles (AGVs), and so forth), industrial Internet-of-Things (IIoT) environments (e.g., having various networking resources, IoT devices, and so forth), or the like, as well as various combinations thereof. Various example embodiments for supporting communications management for an OT domain that uses an associated network domain for supporting communications of the OT domain may be configured to support such communications management using various types of network domains, such as wired network domains (e.g., Internet Protocol (IP) networks, Ethernet networks, Ethernet / Time-Sensitive Networking (TSN) networks, or the like), wireless network domains (e.g., Fourth Generation (4G) wireless networks, Long Term Evolution (LTE) networks, Fifth Generation (5G) networks, future wireless networks (e.g., Sixth Generation (6G) wireless networks or other future wireless networks), and so forth), or the like, as well as various combinations thereof. Accordingly, various example embodiments may be configured to support acceptance and use of various network communications technologies (e.g., 5G or types of network communications technologies) in OT environments, including acceptance and utilization of various network communications technologies in OT environments in a seamless and efficient manner.

Various example embodiments for supporting communication system management may be configured to manage and leverage dependencies between an OT domain and a wireless network domain such as a cellular network domain (e.g., native 5G or 5G/TSN). Various example embodiments for supporting communication system management may be configured to manage and leverage dependencies between an OT domain and a cellular network domain (e.g., OT state change patterns induce specific slice traffic patterns for a given slice configuration in a direction from the OT domain toward the cellular network domain and specific slice configurations and actual limitations in network resources may have an impact on the observed OT state change pattern in the direction from the cellular network domain toward the OT domain) based on association of one or more cellular network slices (e.g., where each individual cellular network slice is a logical abstraction of cellular network resources) to one or more corresponding "OT domain slices" (e.g., a set of OT resources, such as a machine, an AGV, a production cell, a production line, or the like). Various example embodiments for supporting communication system management may be configured to manage and leverage dependencies between an OT domain and a 5G network domain. Various example embodiments for supporting communication system management may be configured to manage and leverage dependencies between an OT domain and a 5G network domain (e.g., OT state change patterns induce specific slice traffic patterns for a given slice configuration in a direction from the OT domain toward the 5G network domain and specific slice configurations and actual limitations in network resources may have an impact on the observed OT state change pattern in the direction from the 5G network domain toward the OT domain) based on association of 5G network slices (e.g., logical abstraction of 5G network resources) to corresponding OT domain slices (e.g., a set of OT resources, such as a machine, an AGV, a production line, or the like).

It will be appreciated that these and various other example embodiments and advantages or potential advantages of supporting communication system management may be further understood by way of reference to the various figures and associated description which are provided below.

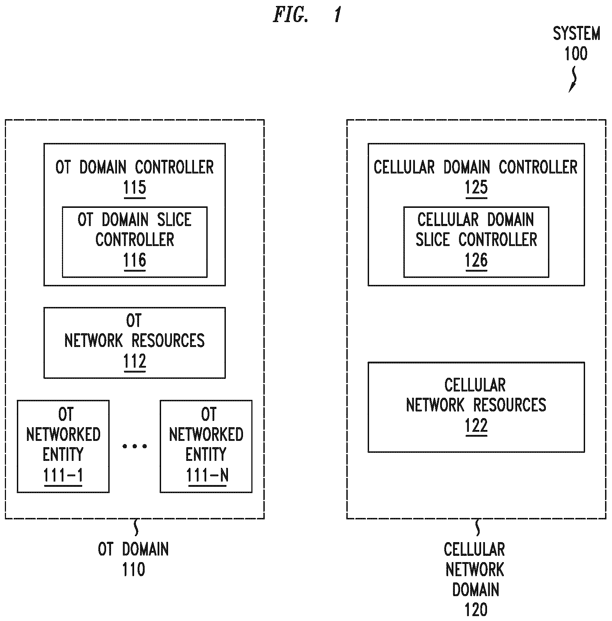

FIG. 1 depicts an example embodiment of a system, including an OT domain and a cellular network domain, configured to support slice configuration across the OT domain and the cellular network domain.

The system 100 includes an OT domain 110 and a cellular network domain 120 configured to support communications of the OT domain 110. It will be appreciated that the OT domain 110 and the cellular network domain 120, although depicted as independent domains for purposes of clarity, may be associated in the sense that the coverage area of the cellular network domain 120 may be at least partially commensurate with the operational area of the OT domain 110 such that the cellular network domain 120 may support communications of the OT domain 110.

The OT domain 110 may be any domain including networked devices supporting communications in an OT context. For example, the OT domain 110 may be a domain of an enterprise or other type of organization or entity. For example, the OT domain may be a production environment (e.g., having various networking resources, productions lines, production cells, machines including fixed machines and AGVs, and so forth), an IIoT environment (e.g., having various networking resources, IoT devices, and so forth), a factory floor environment supporting automated materials handling (AMH), a parcel handling environment supporting automated parcel handling, or the like, as well as various combinations thereof. The OT domain 110 includes a set of OT networked entities 111-1 - 111-N (collectively, OT networked entities 111), a set of OT network resources 112 configured to support communications of the OT networked entities 111, and an OT domain controller 115. It will be appreciated that, although omitted from FIG. 1 for purposes of clarity, the OT domain 110 may include various other entities, elements, capabilities, or the like, as well as various combinations thereof.

The OT networked entities 111 may include various types of entities within an OT domain which may operate within the OT domain and which may communication with other entities within the OT domain, which may depend on the domain type of the OT domain 110. For example, the OT networked entities 111 may include machines (e.g., fixed machines, AGVs, autonomous devices, robots, or the like), production cells, production lines, or the like, as well as various combinations thereof. It will be appreciated that the OT networked entities 111 included in the OT domain 110 may depend on the underlying purpose and capabilities of the OT domain 110. It will be appreciated that the OT networked entities 111 may include various other types of entities which may operate and communication within OT domains.

The OT network resources 112 may include various types of network resources configured to support communications of the OT networked entities 111 of the OT domain 110. For example, the OT network resources 112 may include wired network resources (e.g., Ethernet networks and associated resources, TSNs and associated resources, IP networks and associated resources, or the like, as well as various combinations thereof), wireless network resources (e.g., WiFi networks and associated resources, cellular networks and associated resources, or the like, as well as various combinations thereof), or the like, as well as various combinations thereof. For example, the OT network resources 112 may include network resources at various protocol layers, such as Layer 2 (L2) resources (e.g., L2 virtual local area networks (VLANs), L2 virtual private networks (VPNs), and so forth), Layer 3 (L3) resources (e.g., L3 networks, L3 QoS differentiation (e.g., Differentiated Services (DiffServ), Integrated Services (IntServ), and so forth), L3 policies, and so forth), or the like, as well as various combinations thereof. For example, the OT network resources 112 may include network elements (e.g., routers, switches, bridges, servers, or the like, as well as various combinations thereof), line cards, ports, interfaces (e.g., wired interfaces, air interfaces, and so forth), or the like, as well as various combinations thereof. For example, the OT network resources 112 may include processing resources, memory resources, bandwidth resources, or the like, as well as various combinations thereof. It will be appreciated that the OT network resources 112 may include various other types of resources.

The OT domain controller 115 may be configured to provide various control functions for the OT domain 110. The OT domain controller 115 may be configured to provide various management functions for the OT domain 110, such as resource management, topology management, element management, network management, service management, or the like, as well as various combinations thereof. The OT domain controller 115 may be configured to support management of the OT networked entities 111 (e.g., controlling operations of various production assets such as machines, production cells, production lines, and so forth). The OT domain controller 115 may be configured to support management of the OT networked entities 111 based on use of pen Platform Communications / Unified Architecture (OPC/UA) or using any other suitable management capabilities. The OT domain controller 115 may be configured to support management of the OT network resources 112 (e.g., allocation and configuration of OT network resources 112 to support communications of OT networked entities 111). The OT domain controller 115 may be configured to support slicing functions for supporting slicing of assets of the OT domain 110 (e.g., OT networked entities 111, OT network resources 112, or the like, as well as various combinations thereof), supporting interaction with the cellular network domain 120 for mapping of OT domain slices of the OT domain 110 to cellular network slices of the cellular network domain 120, or the like, as well as various combinations thereof. The OT domain controller 115 includes an OT domain slice controller 116. The OT domain controller 115 may be configured to provide various other control functions for the OT domain 110.

The OT domain slice controller 116 may be configured to provide slice management for the OT domain 110. The OT domain slice controller 116 may be configured to support alignment of OT domain slices of the OT domain 110 and cellular network slices of the cellular network domain 120. The OT domain slice controller 116 may be configured to support alignment of OT domain slices of the OT domain 110 and cellular network slices of the cellular network domain 120 for enabling support for communications of OT networked entities 111 by the cellular network domain 120. The OT domain slice controller 116 may be configured to support alignment of OT domain slices of the OT domain 110 and cellular network slices of the cellular network domain 120 based on mapping of locations of the OT networked entities 111 to OT network resources 112, mapping of network requirements of the OT networked entities 111 to OT network resources 112, mapping of locations and network requirements of OT networked entities 111 to OT domain slices, mapping of locations and network requirements of OT network resources 112 to OT domain slices, or the like, as well as various combinations thereof. The OT domain slice controller 116 may be configured to support alignment of OT domain slices of the OT domain 110 and cellular network slices of the cellular network domain 120 by interacting with the cellular network domain 120 to request allocation of cellular network slices to support communications of the OT networked entities 111. The OT domain slice controller 116 may be configured to provide various other functions for supporting alignment of OT domain slices of the OT domain 110 and cellular network slices of the cellular network domain 120 in a manner that enables support for communications of OT networked entities 111 of the OT domain 110 by the cellular network domain 120.

The cellular network domain 120 may be any domain including cellular network communication resources configured to support cellular communications by networked devices. For example, the cellular network domain 120 may include a public cellular network (e.g., of a cellular network provider or other organization or entity), a non-public network (NPN) (e.g., of an enterprise, such as the enterprise or organization or entity that operates the OT domain, or other type of organization or entity), or the like, as well as various combinations thereof. For example, in the case in which the cellular network domain 120 is an NPN, the cellular network domain 120 may be a standalone NPN (SNPN) or a public network integrated NPN (PNI-NPN). For example, the cellular network domain 120 may include one or more cellular network types, such as an LTE network, a 5G network (e.g., a native 5G network, a combined 5G and TSN network (e.g., with contained 5G/TSN bridges), or the like), a future wireless network (e.g., a 6G wireless network or other future wireless network), or the like, as well as various combinations thereof. The cellular network domain 120 includes cellular network resources 122 and a cellular domain controller 125. It will be appreciated that, although omitted from FIG. 1 for purposes of clarity, the cellular network domain 120 may include various other entities, elements, capabilities, or the like, as well as various combinations thereof.

The cellular network resources 122 may include various types of resources which may form part of a cellular network. For example, the cellular network resources 122 may include processing resources, memory resources, bandwidth resources, or the like, as well as various combinations thereof. For example, the cellular network resources 122 may include radio access network (RAN) resources (e.g., radio interface resources, base stations, distributed/centralized units, radio network controllers, or the like, as well as various combinations thereof), core network (CN) resources (e.g., routers, gateways, servers, location registers, support nodes, mobility management functions, policy functions, charging functions, or the like, as well as various combinations thereof), or the like, as well as various combinations thereof. It will be appreciated that the types of cellular network resources 122 supported may depend on the cellular technology of the cellular network domain 120. For example, in the case of a 5G cellular network, the cellular network resources 122 may include physical resource blocks (PRBs), 5G Core Access and Mobility Management Functions (AMFs), 5G Core Session Management Functions (SMFs), 5G Core Policy and Charging Functions (PCFs), 5G Core Application Functions (AFs), and so forth. It will be appreciated that the cellular network resources 122 may include various other types of resources.

The cellular domain controller 125 may be configured to provide various control functions for the cellular network domain 120. The cellular domain controller 125 may be configured to provide various management functions for the cellular network domain 120, such as resource management, topology management, element management, network management, service management, or the like, as well as various combinations thereof. The cellular domain controller 125 may be configured to support slicing functions for supporting slicing of the cellular network resources 122, supporting interaction with the OT domain 110 for mapping of OT domain slices of the OT domain 110 to cellular network slices of the cellular network domain 120, or the like, as well as various combinations thereof. The cellular domain controller 125 includes a cellular domain slice controller 126. The cellular domain controller 125 may be configured to provide various other control functions for the cellular network domain 120.

The cellular domain slice controller 126 may be configured to provide slice management for the cellular network domain 120. The cellular domain slice controller 126 may be configured to support alignment of OT domain slices of the OT domain 110 and cellular network slices of the cellular network domain 120. The cellular domain slice controller 126 may be configured to support alignment of OT domain slices of the OT domain 110 and cellular network slices of the cellular network domain 120 for enabling support for communications of OT networked entities 111 by the cellular network domain 120. The OT domain slice controller 116 may be configured to support alignment of OT domain slices of the OT domain 110 and cellular network slices of the cellular network domain 120 based on configuration of the cellular network domain 120 to support communications of OT networked entities 111 of the OT domain 110 based on interaction with the OT domain 110. The slice controller 116 may be configured to support alignment of OT domain slices of the OT domain 110 and cellular network slices of the cellular network domain 120, based on configuration of the cellular network domain 120 to support communications of OT networked entities 111 of the OT domain 110 based on interaction with the OT domain 110, by receiving from the OT domain 110 slice requests indicative of OT domain slices of the OT domain 110, configuring cellular network slices of the cellular network domain 120 based on the OT domain slices of the OT domain 110, and sending toward the OT domain 110 slice responses indicative of the cellular network slices of the cellular network domain 120, where the cellular network slices of the cellular network domain 120 are configured to support the communications of the OT networked entities 111 of the OT domain 110. The cellular domain slice controller 126 may be configured to provide various other functions for supporting alignment of OT domain slices of the OT domain 110 and cellular network slices of the cellular network domain 120 in a manner that enables support for communications of OT networked entities 111 of the OT domain 110 by the cellular network domain 120.

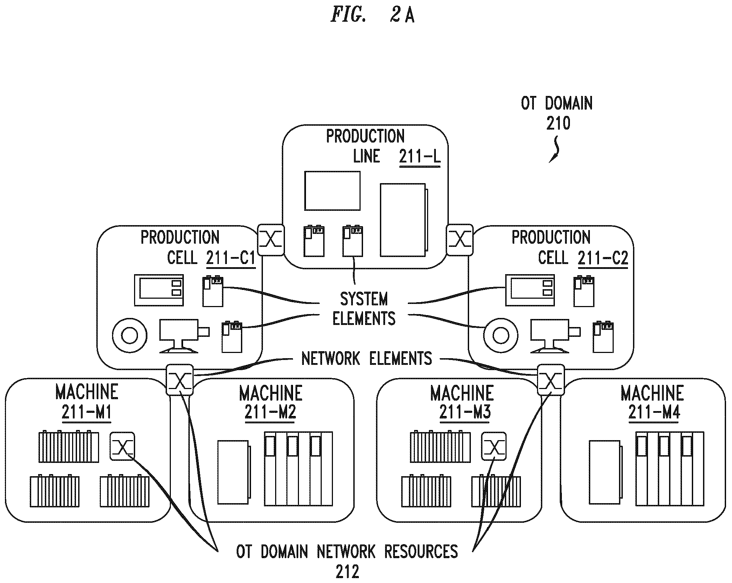

It will be appreciated, as indicated above, that the OT domain 110 and the cellular network domain 120, although depicted as independent domains for purposes of clarity, may be associated in various ways such that the cellular network domain 120 may be used to support communications of the OT networked entities of 111 of the OT domain 110. For example, the OT domain 110 and the cellular network domain 120 may be associated by being physically co-located (e.g., fully or partially overlapping locations and/or areas) such that the cellular network domain 120 may be used to support communications of the OT networked entities of 111 of the OT domain 110. For example, the OT domain 110 and the cellular network domain 120 may be associated in the sense that the cellular network domain 120 may be considered to be another asset of the OT domain 110 that allows for flexibility in configuration and reconfiguration of the OT domain 110 (e.g., by replacing wired connectivity of the OT domain 110 with wireless connectivity enabled by the cellular network domain 120). The OT domain 110 and the cellular network domain 120 may be associated such that the OT domain 110 may be considered to include the OT domain assets of the OT domain 110 (e.g., the OT networked entities 111 and OT network resources 112, as well as various other assets) as well as cellular network domain assets of the cellular network domain 120 (e.g., the cellular network resources 122) and, thus, interconnects of the OT domain 110 (e.g., interconnects of individual devices (e.g., machines)) and networks (e.g., machines and production cells) may be realized using cellular network resources 122 of the cellular network domain 120. It will be appreciated that the OT domain 110 and the cellular network domain 120 may be associated in various other ways. It will be appreciated that the association of the OT domain 110 and the cellular network domain 120 may be further understood by way of reference to the example embodiments of FIGs. 2A - 2C.

FIGs. 2A - 2C depict an example embodiment of an OT domain for illustrating slice configuration across the OT domain and a cellular network domain supporting communications of the OT domain.

FIG. 2A depicts an OT domain 210 including a set of OT domain resources. The OT domain resources includes OT domain system resources 211 and OT domain network resources 212. The OT domain system resources 211 are configured to support functions of the OT domain 210, which may vary for different OT domain types (e.g., factories, package distribution systems, and so forth). The OT domain network resources 212 are configured to support communications of the OT domain system resources 211 associated with supporting functions of the OT domain 210. The OT domain resources, including the OT domain system resources 211 and the OT domain network resources 212, may be managed using OPC/UA or using any other suitable management capabilities. It will be appreciated that the OT domain 210 may include various other numbers, types, and arrangements of OT domain resources (e.g., fewer or more of any of the resources, using one or more other types of resources, using more hierarchical layers of resources or less hierarchical layers of resources, or the like, as well as various combinations thereof).

The OT domain system resources 211 are configured to support functions of the OT domain 210. The OT domain system resources 211 include a set of machines 211-M1 - 211-M4 (collectively, machines 211-M), a pair of production cells 211-C1 - 211-C2 (collectively, production cells 211-C), and a production line 211-L. The machines 211-M may include various types of machines configured to perform functions of the OT domain, which may vary for different OT domain types. The machines 211-M may include fixed machines, mobile machines such as AGVs, or the like, as well as various combinations thereof. The production cells 211-C may include various types of machines configured to perform functions of the OT domain. The production line 211-L may include various types of machines configured to perform functions of the OT domain. The OT domain system resources 211 may be considered to be OT networked entities configured to communicate for supporting various functions of the OT domain 210, may be considered to include OT networked entities configured to communicate for supporting various functions of the OT domain 210, or the like, as well as various combinations thereof. It will be appreciated various other numbers, types, and arrangements of OT domain system resources 211 (e.g., fewer or more of any of the system resources, using one or more other types of system resources, using more hierarchical layers or less hierarchical layers of system resources, or the like, as well as various combinations thereof) may be used within the OT domain 210.

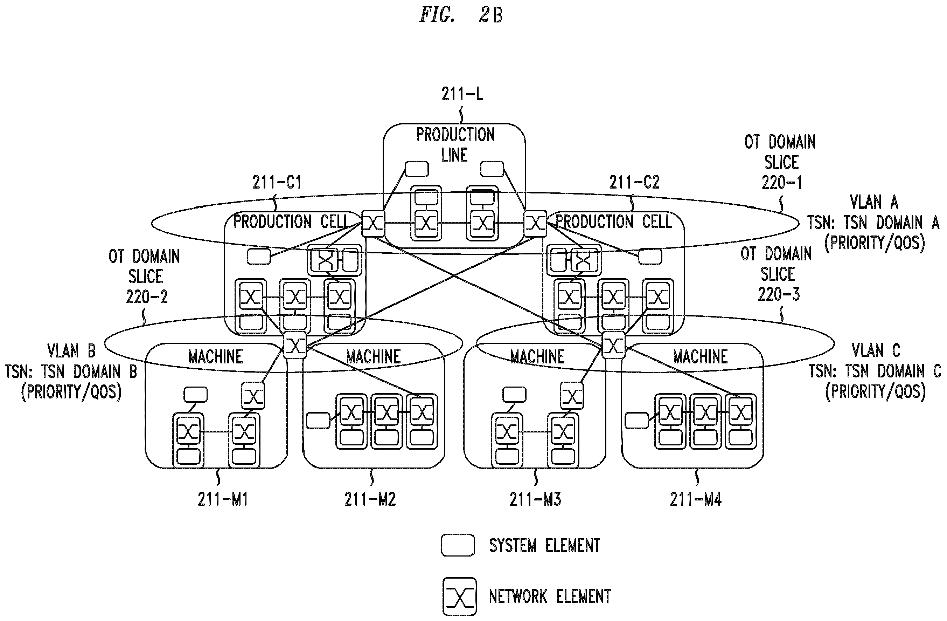

The OT domain network resources 212 may include various network resources which may support communications of the OT domain system resources 211. The OT domain network resources 212, for purposes of clarity, are illustrated as network elements within and between various OT domain system resources 211 (illustratively, within machines 211-M1 and 211-M3, between machines 211-M1 and 211-M2 and production cell 211-C1, between machines 211-M3 and 211-M4 and production cell 211-C2, between machines 211-M1 and 211-M2 and production cell 211-C1, between production cell 211-C1 and production line 211-L, and between production cell 211-C2 and production line 211-L). The OT domain network resources 212 may include Ethernet resources, TSN resources, L2 and/or L3 resources, or the like, as well as various combinations thereof. It will be appreciated that various other numbers, types, and arrangements of OT domain network resources 212 (e.g., fewer or more of any of the network resources, using one or more other types of network resources, using more hierarchical layers or less hierarchical layers of network resources, or the like, as well as various combinations thereof) may be used within the OT domain 210. The slicing of the OT domain network resources 212 to support communications of the OT domain system resources 211 may be further understood by way of reference to FIG. 2B.

FIG. 2B illustrates OT domain slices such that a combination of FIGs. 2A and 2B illustrates a set of OT domain slices 220 based on an OT domain topology realized for the OT domain system resources 211 of FIG. 2A based on the OT domain network resources 212 of FIG. 2A. The OT domain topology realized for the OT domain system resources 211 based on the OT domain network resources 212 (which may be realized based on Ethernet, TSN, or the like, as well as various combinations thereof) realizes the required connectivity for the OT domain system resources 211.

The OT domain slices 220 may be defined based on various criteria. The use of slicing in environments, such as OT domains, provides for various types of isolation (e.g., resource isolation, operational isolation, or the like, as well as various combinations thereof) in the environments.

For example, slicing in OT domains may be used for spatial granularity. For example, each production line or production cell may correspond to its own slice having its own network resources and network configuration.

For example, slicing in OT domains may be used for temporal granularity. For example, for some "flexible production" enterprises, reconfiguration of the production may be done relatively often (e.g., on a daily basis, on a weekly basis, or the like) such that the network / slice configuration may need to be adapted relatively frequently.

For example, slicing in OT domains may be used for governance granularity. For example, the enterprise may be the NPN operator whereas the departments are the tenants (e.g., different production departments, IT, and so forth), such that the required authority of different production departments may be supported over the OT resource / network slice associations).

For example, slicing in OT domains may be used for functional granularity, where slices dependent on their association with OT assets may have largely varying relevance for different types of OT assets. For example, for critical OT assets (e.g., control, voice communication, AGVs, and so forth), only a small number of UEs per slice may have high reliability requirements for certain functions (such as control functions) and low reliability requirements for other functions (controller software download, log data upload, and so forth) such that multiple network slices may be used for the different reliability levels. For example, for certain non-critical OT assets, a relatively large number of UEs may be supported per slice with medium level reliability requirements and no or relatively low mobility. For example, for other non-critical OT assets, a relatively large number of UEs may be supported per slice with low level reliability requirements and some mobility.

The use of slicing in environments such as OT domains may provide for various other types of isolation in the environments based on various other types of criteria.

As depicted in FIG. 2B, the OT domain slices 220 are based on network capabilities supported by OT domain network resources 212. In the example of FIG. 2B, the network capabilities supported by the OT domain slices 220 include QoS and priority, which are sliced based on use of VLANs. As depicted in FIG. 2B, the OT domain slices 220 include an OT domain slice 220-1 (which includes a VLAN and TSN domain A supporting particular priority and QoS levels) based on OT domain network resources 212 associated with communications of the production line 211-L and communications between the production cells 211-C and the production line 211-L, an OT domain slice 220-2 (which includes a VLAN and TSN domain B supporting particular priority and QoS levels) based on OT domain network resources 212 associated with communications of the production cell 211-C1 and communications between the machines 211-M1 and 211-M2 and the production cell 211-C1, and an OT domain slice 220-3 (which includes a VLAN and TSN domain C supporting particular priority and QoS levels) based on OT domain network resources 212 associated with communications of the production cell 211-C2 and communications between the machines 211-M3 and 211-M4 and the production cell 211-C2. It will be appreciated that fewer or more OT domain slices 220 may be supported, OT domain slices 220 may be defined in other ways (e.g., based on other criteria), or the like, as well as various combinations thereof.

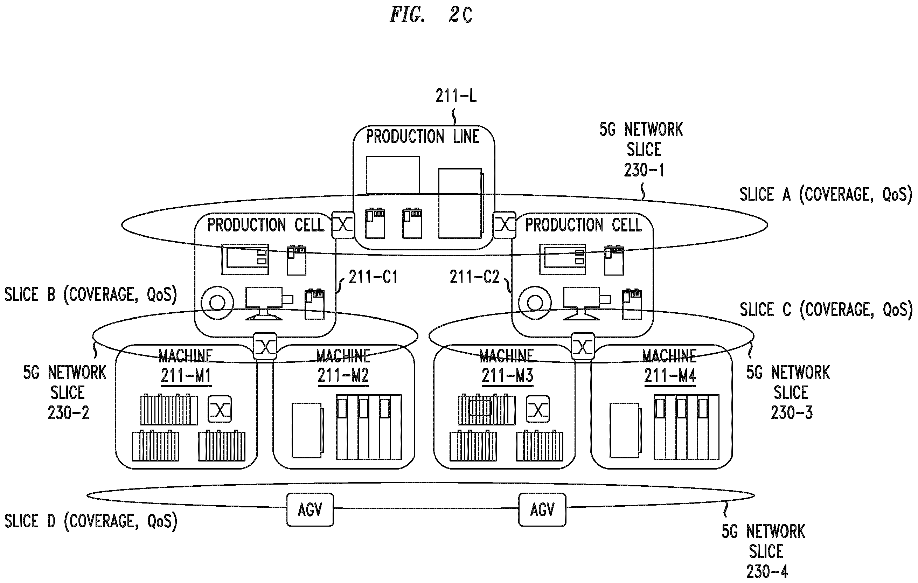

It will be appreciated that the alignment of the OT domain slices 220 to 5G network slices of a 5G network domain may be further understood by way of reference to FIG. 2C.

FIG. 2C illustrates 5G network slices such that a combination of FIGs. 2B and 2C illustrates alignment of OT domain slices 220 and 5G network slices 230 such that the 5G network slices 230 may be used to support communications of the OT domain system resources 211 of the OT domain 210. The OT domain topology realized for the OT domain system resources 211 based on the OT domain network resources 212 (which may be realized based on Ethernet, TSN, or the like, as well as various combinations thereof) may be mapped to the 5G network slices 230. The 5G network slices may be defined based on the type of 5G system being used (e.g., a native 5G network, a combined 5G and TSN network (e.g., with contained 5G/TSN bridges), or the like).

The 5G network slices 230 may be defined based on various criteria. The use of slicing in environments, such as 5G cellular networks, provides for various types of isolation (e.g., resource isolation, operational isolation, or the like, as well as various combinations thereof) in the environments. For example, 5G network slices may include slicing of radio interface resources, ports, interfaces, network elements, virtualized network functions (VNFs) configured to provide various 5G network functions, or the like, as well as various combinations thereof.

As depicted in FIG. 2C, the 5G network slices 230 are based on network capabilities supported by the 5G network domain. In the example of FIG. 2C, the network capabilities supported by the 5G network slices 230 include coverage and QoS. As depicted in FIG. 2C, the 5G network slices 230 include a 5G network slice 230-1 which provides particular coverage and QoS capabilities and which maps to the OT domain slice 220-1 such that the coverage and QoS capabilities are able to support location and network requirements of the OT domain slice 220-1 and the associated OT domain system resources 211 of the OT domain slice 220-1, a 5G network slice 230-2 which provides particular coverage and QoS capabilities and which maps to the OT domain slice 220-2 such that the coverage and QoS capabilities are able to support location and network requirements of the OT domain slice 220-2 and the associated OT domain system resources 211 of the OT domain slice 220-2, a 5G network slice 230-3 which provides particular coverage and QoS capabilities and which maps to the OT domain slice 220-3 such that the coverage and QoS capabilities are able to support location and network requirements of the OT domain slice 220-3 and the associated OT domain system resources 211 of the OT domain slice 220-3. As further depicted in FIG. 2C, the 5G network slices 230 include an additional 5G network slice 230-4 which provides particular coverage and QoS capabilities for a set of AGVs of the OT domain 210. The alignment of the OT domain slices 220 and the 5G network slices 230 may be based on mappings of locations and requirements of OT domain resources of the OT domain slices 220 to locations and capabilities of 5G network resources of the 5G network slices 230. It will be appreciated that fewer or more 5G network slices 230 may be supported, 5G network slices 230 may be defined in other ways (e.g., based on other criteria), or the like, as well as various combinations thereof.

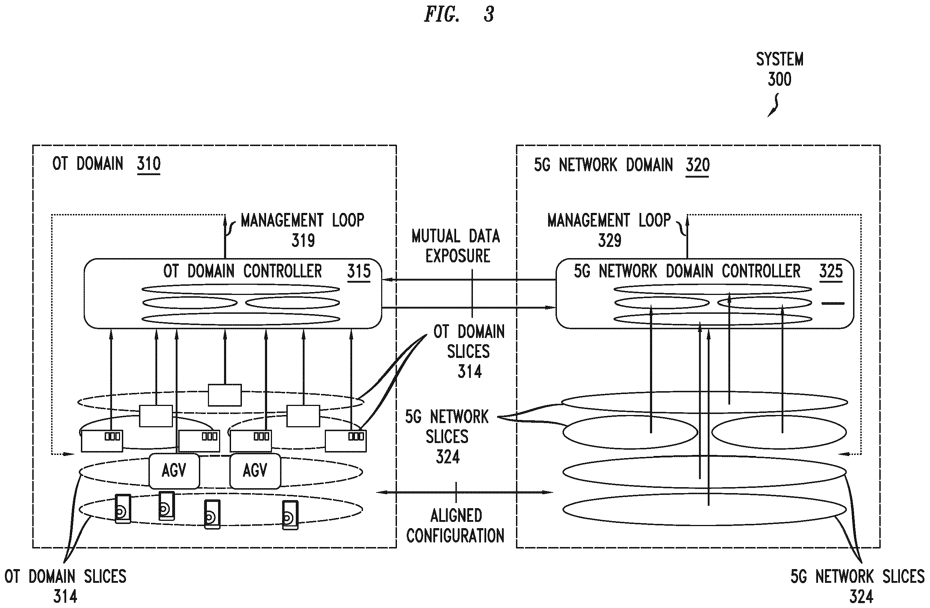

It will be appreciated that the alignment of the OT domain slices 220 and the 5G network slices 230 based on mappings of locations and requirements of OT domain resources of the OT domain slices 220 to locations and capabilities of 5G network resources of the 5G network slices 230 may be further understood by way of reference to FIG. 3.

FIG. 3 depicts an example embodiment of a system, including an OT domain and a 5G network domain, configured to support slice configuration across the OT domain and the 5G network domain.

The system 300 includes an OT domain 310 and a 5G network domain 320. The OT domain 310 is configured to support a set of OT domain slices 314 and includes an OT domain controller 315. The 5G network domain 320 is configured to support a set of 5G network slices 324 and includes a 5G network domain controller 325. The system 300 is configured to support slice configuration across the OT domain 310 and the 5G network domain 320, including alignment of slices across the OT domain 310 and the 5G network domain 320.

The OT domain 310 is configured to support the set of OT domain slices 314. For example, the OT domain slices 314 may be similar to the OT domain slices 220 of FIG. 2. The OT domain controller 315 is configured to provide various management functions for the OT domain 310, including slice management functions for managing the OT domain slices 314 and supporting association of the OT domain slices to the 5G network slices 324 of the 5G network domain 320. This is illustrated in FIG. 3 by the representation of the OT domain slices 314 within the OT domain controller 315. The OT domain 310 is configured to support a management loop 319 whereby the OT domain controller 315 manages the resources of the OT domain 310 (e.g., managing system resources such as machines, AGVs, UEs, system processing resources, and so forth and/or managing network resources such as network elements, L2/L3 capabilities and services, and so forth), receives information from the resources of the OT domain 310 (e.g., topology information, system resource state information, network resource state information, or the like, as well as various combinations thereof), and uses the information from the resources of the OT domain 310 to support further management of the resources of the OT domain 310.

The 5G network domain 320 is configured to support the set of 5G network slices 324. For example, the 5G network slices 324 may be similar to the 5G network slices 230 of FIG. 2. The 5G network domain controller 325 is configured to provide various management functions for the 5G network domain 320, including slice management functions for managing the 5G network slices 324 and association of the 5G network slices 324 to the OT domain slices 314 of the OT domain 310. This is illustrated in FIG. 3 by the representation of the 5G network slices 324 within the 5G network domain controller 325. The 5G network domain 320 is configured to support a management loop 329 whereby the 5G network domain controller 325 manages the resources of the 5G network domain 320 (e.g., managing network resources such as RAN resources, Core resources, and so forth), receives information from the resources of the 5G network domain 320 (e.g., topology information, network resource state information, or the like, as well as various combinations thereof), and uses the information from the resources of the 5G network domain 320 to support further management of the resources of the 5G network domain 320.

As illustrated in FIG. 3, the system 300 is configured to support slice alignment between the OT domain slices 314 of the OT domain 310 and the 5G network slices 324 of the 5G network domain 320. The system 300 may be configured to, during configuration or reconfiguration of an OT domain 310, determine mapping of OT domain slices to 5G network slices. The determination of the mapping of OT domain slices to 5G network slices may be performed by associating OT networked entities to OT domain network resources (e.g., VLANs, TSN domains, or the like, as well as various combinations thereof) according to network requirements of the OT networked entities (e.g., QoS, isolation, prioritization, or the like, as well as various combinations thereof) and mapping these associations to one or more 5G network slices for the OT networked entities such that communications of the OT networked entities may be supported by the one or more 5G network slices in accordance with the network requirements of the OT networked entities. The determination of the mapping of OT domain slices to 5G network slices may be performed by associating the location of an OT networked entity to a coverage area of a 5G network slice. The determination of the mapping of OT domain slices to 5G network slices may be performed by determining a mapping of the network requirements of an OT networked entity to OT domain slice requirements of OT domain slices, which may then be used to request 5G slices to support communications of the OT networked entity in accordance with the network requirements of the OT networked entity. The determination of the mapping of OT domain slices to 5G network slices may be performed by determining a mapping of the network requirements of an OT networked entity to OT domain slice requirements of OT domain slices, which may be based on mapping of the location of the OT networked entity to OT network elements and determination of the network requirements of the OT network elements for supporting the OT networked entity, which may then be used to request 5G slices to support communications of the OT networked entity.

The determination of the mapping of OT domain slices to 5G network slices may be performed by detecting a condition associated with an operations technology (OT) domain including a set of OT networked entities and a set of OT network elements, where the condition is associated with a first OT networked entity, determining, based on a location of the first OT networked entity, a set of network requirements of the first OT networked entity, determining an OT domain slice configured to support the set of network requirements of the first OT networked entity at the location of the first OT networked entity, and sending, toward a cellular network domain based on the OT domain slice, a request for a cellular network slice configured to support the set of network requirements of the first OT networked entity at the location of the first OT networked entity.

The determination of the mapping of OT domain slices to 5G network slices may be performed by detecting a condition associated with an operations technology (OT) domain including a set of OT networked entities and a set of OT network elements, where the condition is associated with a first OT networked entity, determining, in response to the condition, a location of the first OT networked entity and network requirements associated with the location of the first OT networked entity, determining, based on the location of the first OT networked entity and the network requirements associated with the location of the first OT networked entity, an OT domain slice configured to support the network requirements at the location of the first OT networked entity, and sending, toward a cellular network domain based on the OT domain slice, a request for a cellular network slice configured to support the network requirements at the location of the first OT networked entity.

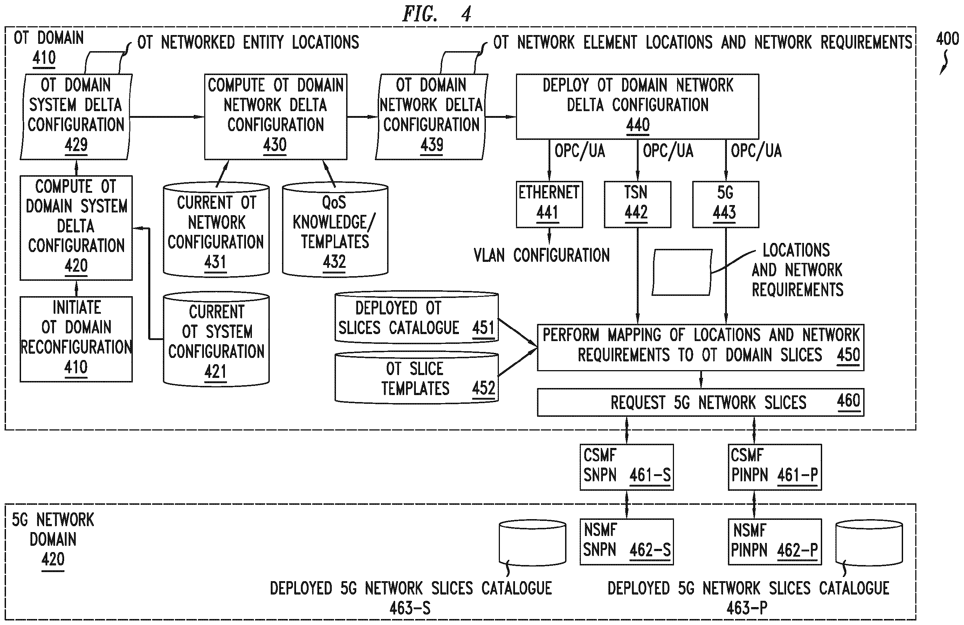

It is noted that, after the set of 5G network slices has been requested and instantiated, corresponding state exists in both the OT domain and the 5G network domain and may be maintained in both the OT domain (e.g., in an OT domain slice catalogue in the OT domain, including a mapping between the OT domain slices used to request the corresponding 5G network slices and the 5G network slices that support the OT networked entities) and the 5G network domain (e.g., in a 5G network slice catalogue in the 5G network domain, including a mapping between the 5G network slices that support the OT networked entities and the OT domain slices used to request the corresponding 5G network slices that support the OT networked entities). The alignment of OT domain slices to 5G network slices may be further understood by way of reference to FIG. 4.

As illustrated in FIG. 3, the system 300 is configured to support mutual data exposure between the OT domain 310 and the 5G network domain 320.

The OT domain controller 315 is configured to expose data of the OT domain 310, including data related to alignment of the OT domain slices 314 of the OT domain 310 and the 5G network slices 324 of the 5G network domain 320, with the 5G network domain controller 325 (e.g., OT domain slice identifiers, OT domain slice descriptions, OT domain slice identifier to 5G network slice identifier mappings, OT networked entity to 5G network resource mappings, or the like, as well as various combinations thereof). It will be appreciated that the OT domain controller 315 may expose various other types of data of the OT domain 310 to the 5G network domain 320.

The 5G network domain controller 325 is configured to expose data of the 5G network domain 320, including data related to alignment of the OT domain slices 314 of the OT domain 310 and the 5G network slices 324 of the 5G network domain 320, with the OT domain controller 315 (e.g., 5G network resource information, 5G network slice identifiers, 5G network slice descriptors, 5G network slice identifier to OT domain slice identifier mappings, 5G network resource to OT networked entity mappings, or the like, as well as various combinations thereof). It will be appreciated that the 5G network domain controller 325 may expose various other types of data of the 5G network domain 320 to the OT domain 310.

The mutual data exposure between the OT domain 310 and the 5G network domain 320 may be implemented in various ways, used for various purposes, or the like, as well as various combinations thereof. The mutual data exposure between the OT domain 310 and the 5G network domain 320 may be used to support various types of management functions, such as resource management functions, element management functions, topology management functions, network management functions (e.g., fault, configuration, accounting, performance, security (FCAPS) functions or the like), or the like, as well as various combinations thereof. The mutual data exposure between the OT domain 310 and the 5G network domain 320 may be used to support management functions within OT domain 310, management functions within 5G network domain 320, management functions between OT domain 310 and 5G network domain 320, or the like, as well as various combinations thereof. It is noted that the mutual data exposure between the OT domain 310 and the 5G network domain 320 may be implemented in various other ways, used for various other purposes, or the like, as well as various combinations thereof.

The mutual data exposure between the OT domain 310 and the 5G network domain 320 may by supported based on a common logical abstraction of the OT domain system/network and the 5G cellular network, with the OT domain expressing per-location network requirements (e.g., network requirements such as QoS, isolation, prioritization, or the like, as well as various combinations thereof) and the 5G cellular network mapping such per-location network requirements to 5G network slice abstraction, thereby establishing a baseline to put various network management capabilities (e.g., FCAPS, advanced network management capabilities, and so forth) on top of the common logical abstraction (e.g., the common cross-domain logical abstraction may be used to mutually expose data (e.g., raw data, FCAPS data / events, insights, and so forth) for various purposes which have meaningful cross-domain semantics (e.g., monitoring functions, anomaly detection functions which may include exposure of anomaly detection contexts and anomaly events, or the like, as well as various combinations thereof).

The system 300 may be configured to support various other functions for supporting slice configuration across an OT domain and a 5G network domain.

FIG. 4 depicts an example embodiment of a process flow configured to support slice configuration across an OT domain and a 5G network domain.

The process flow 400, as illustrated in FIG. 4 and discussed further below, is configured to support slice configuration across an OT domain and a 5G network domain. For both the 5G ("native 5G") and 5G/TSN cases, when the OT system level configuration changes are requested, the introduced locations / location areas where connectivity with a particular QoS (and/or other network requirement(s)) is required are translated to slice requirements in the form of "OT domain slices" (which are slice profiles from the application-level (OT) perspective, and which may be defined based on generic template definitions and instantiated with specific OT domain slide identifiers), the required set of 5G network slices to satisfy the OT system level configuration changes are requested over an interface to the 5G network domain, and 5G network slices assigned to satisfy the OT system level configuration changes may be mapped to the OT domain slices associated with the OT system level configuration changes (e.g., the 5G slice identifiers, after being received by the OT domain from the 5G network domain, can be connected with the corresponding OT domain slice identifiers and, thus, a catalogue (inventory) of deployed slices can be maintained. It will be appreciated that various operations across the interface between the OT domain and the 5G network domain may then result in updates to the slice catalogues maintained on both the OT domain side and the 5G network side. It will be appreciated that these as well as various other capabilities and operations may be further understood by considering various aspects of the process flow 400 which are discussed further below.

At block 410, an OT domain reconfiguration is initiated. The OT domain reconfiguration may be initiated manually or automatically and, thus, the OT domain reconfiguration may be triggered or detected. The OT domain reconfiguration may be initiated based on various conditions. For example, the OT domain reconfiguration may be initiated based on a change to the OT domain system, such as addition of one or more new OT system elements (e.g., machines, AGVs, UEs, production cells, production lines, or the like), movement of one or more existing OT system elements to a new location (which may have a different OT network coverage area and associated 5G network coverage area), removal of one or more existing OT system elements, or the like, as well as various combinations thereof.

At block 420, an OT domain system delta configuration 429 is computed based on a current OT system configuration 421. The OT domain system delta configuration 429 may be computed in response to the initiation of the OT domain reconfiguration (e.g., after the OT domain reconfiguration is triggered or detected). The current OT system configuration 421 may specify various aspects of the OT system configuration, such as identification of the OT system entities, locations of the OT system entities, or the like, as well as various combinations thereof. The OT domain system delta configuration 429 may specify concrete changes to the current OT system configuration 421. The OT domain system delta configuration 429 may specify location information for OT system entities, such as the physical locations of machines, a location area or set of location areas to which a mobile machine (e.g., AGV or the like) is deployed, or the like, as well as various combinations thereof. For example, in the case of wired connectivity portions of the OT domain (e.g., Ethernet, TSN, or the like), the location in the OT domain system delta configuration 429 may identify the physical location of a network port to which the OT entity (e.g., a machine) should connect. For example, in the case of WiFi portions of the OT domain, the location in the OT domain system delta configuration 429 may identify an Access Point (AP) which covers the location of the OT entity. For example, in the case of 5G portions of the OT domain, the location in the OT domain system delta configuration 429 may identify the 5G network instance providing (private or public) connectivity at the location / location area of the OT entity. For example, in the case of 5G/TSN portions of the OT domain, the location in the OT domain system delta configuration 429 may identify the 5G/TSN bridge providing (assuming the "transparent" bridge model) connectivity at the location / location area of the OT entity. It will be appreciated that the OT domain system delta configuration 429 may specify various other types of information indicative of the changes to the current OT system configuration 421.

At block 430, an OT domain network delta configuration 439 is computed based on the OT domain system delta configuration 429. This also may be considered to be a translation of the OT domain system delta configuration 429 into the OT domain network delta configuration 439. The OT domain network delta configuration 439 also may be computed based on QoS knowledge / templates 432 (network requirement knowledge templates) and a current OT network configuration 431. The QoS knowledge / templates 432 may include knowledge and/or templates regarding various types of network requirements (e.g., QoS, isolation, prioritization, or the like, as well as various combinations thereof) which may be applied within the OT domain network. The current OT network configuration 431 may specify various types of network configuration information for the OT domain network, such as network topology information indicative of connectivity between OT domain entities of the OT domain network, network requirements (e.g., QoS, isolation, prioritization, or the like, as well as various combinations thereof) for the locations / location areas of the OT domain entities in the OT domain network, or the like, as well as various combinations thereof.

The OT domain network delta configuration 439 may specify changes in network requirements (e.g., QoS, isolation, prioritization, or the like, as well as various combinations thereof) for the locations / location areas of the OT domain entities in the OT domain system delta configuration 429.

For example, in the case of wired connectivity portions of the OT domain (e.g., Ethernet, TSN, or the like), the location in the OT domain system delta configuration 429 may identify the physical location of a network port to which the OT entity (e.g., a machine) should connect, and the OT domain network delta configuration 439 may specify the associated configuration of the OT domain network (e.g., VLAN configuration for Ethernet, SRP configuration for TSN, or the like).

For example, in the case of WiFi portions of the OT domain, the location in the OT domain system delta configuration 429 may identify an Access Point (AP) which covers the location of the OT entity, and the OT domain network delta configuration 439 may specify the associated configuration of the OT domain network (e.g., AP configuration or the like).

For example, in the case of 5G portions of the OT domain, the location in the OT domain system delta configuration 429 may identify the 5G network instance providing (private or public) connectivity at the location / location area of the OT entity (e.g., depending on whether the 5G network instance is providing or public connectivity, this may be a Public Land Mobile Network (PLMN), an Access Point Name (APN)), an available slice, or the like, as well as various combinations thereof), and the OT domain network delta configuration 439 may specify the associated configuration of the OT domain network (e.g., configuration of elements of the 5G network or the like).

For example, in the case of 5G/TSN portions of the OT domain, the location in the OT domain system delta configuration 429 may identify the 5G/TSN bridge providing (assuming the "transparent" bridge model) connectivity at the location / location area of the OT entity, and the OT domain network delta configuration 439 may specify the associated configuration of the OT domain network (e.g., configuration of elements of the 5G/TSN or the like).

It will be appreciated that the OT domain network delta configuration 439 may specify various other types of information related to the changes in network requirements (e.g., QoS, isolation, prioritization, or the like, as well as various combinations thereof) for the locations / location areas of the OT domain entities in the OT domain system delta configuration 429.

At block 440, the OT domain network delta configuration 439 is deployed to the OT domain network. For example, the OT domain network delta configuration 439 may be deployed to the Ethernet portion of the OT domain network based on configuration of the Ethernet portion of the OT domain network to support the OT domain network delta configuration 439 (e.g., based on VLAN configuration as illustrated in FIG. 4), which is represented by the Ethernet block 441 in FIG. 4. For example, the OT domain network delta configuration 439 may be deployed to the TSN portion of the OT domain network based on configuration of the TSN portion of the OT domain network to support the OT domain network delta configuration 439, which is represented by the TSN block 442 in FIG. 4. It is noted that the deployment of the OT domain network delta configuration 439 to the OT domain network also may trigger configuration of the 5G network to support the OT domain network delta configuration 439, which is represented by the 5G block 443 in FIG. 4. The configuration of the OT domain network to support the OT domain network delta configuration 439 may be performed based on an OPC/UA network model and/or using any other suitable capabilities for supporting configuration of an OT domain to support the OT domain network delta configuration 439.

At block 450, the locations and network requirements of the OT domain network elements are mapped to an OT domain slice. It will be appreciated that, since the OT domain network elements are supporting or expected to support the OT networked entities, this also may be considered to be a mapping of the locations and network requirements of the associated OT networked entities to the OT domain slice. The mapping of the locations and network requirements of the OT networked entities to an OT domain slice may be performed by searching a set of existing OT domain slices for attempting to identify an existing OT domain slice corresponding to the locations and network requirements of the OT networked entities. The set of existing OT domain slices, as indicated in FIG. 4, may be maintained as a Deployed OT Domain Slice Catalogue 451. If an existing OT domain slice corresponding to the locations and network requirements of the OT networked entities is identified then the existing OT domain slice may be used to request a corresponding 5G network slice to support communications of the OT networked entities in a manner that satisfies the locations and network requirements of the OT networked entities. If an existing OT domain slice corresponding to the locations and network requirements of the OT networked entities is not identified then a new OT domain slice may be defined for use in requesting a corresponding 5G network slice to support communications of the OT networked entities in a manner that satisfies the locations and network requirements of the OT networked entities. The new OT domain slice may be defined based on an OT domain slice template (e.g., a single template or a template selected from a set of available templates). The OT domain slice templates(s), as indicated in FIG. 4, may be maintained as OT Domain Slice Templates 452. The new OT domain slice may be defined based on an OT domain slice template by using the locations and network requirements of the OT networked entities to complete relevant portions of the OT domain slice template and form thereby the new OT domain slice. The new OT domain slice may be stored as part of an existing set of OT domain slices (e.g., Deployed OT Domain Slice Catalogue 451) so as to be available for use in supporting OT domain to 5G network slice mapping for OT networked entities in the future.

At block 460, a 5G network slice is requested for the OT networked entities based on the OT domain slice for the OT networked entities. The 5G network slice may be requested by sending a slice request from the OT domain to the 5G network domain. The slice request may include the OT domain slice which includes the indication of the locations and network requirements of the OT domain network elements supporting the OT networked entities. The 5G network domain receives the slice request from the OT domain, determines a 5G network slice for the OT networked entities based on the OT domain slice for the OT networked entities, configures the 5G network domain based on the 5G network slice such that the 5G network slice is configured to support communications of the OT networked entities, and responds to the OT domain with an indication of configuration of the 5G network slice of the 5G network domain to support communications of the OT networked entities. The OT domain receives the slice response from the 5G network domain and may initiate further operations based on the slice response from the 5G network domain.

The 5G network slice for the OT networked entities may be determined by identifying (e.g., based on a search of existing 5G network slices or definition of a new 5G network slice) a 5G network slice corresponding to the OT domain slice and, thus, corresponding to the locations and network requirements of the OT network elements and, thus, also of OT networked entities supported or to be supported by the OT network elements. The 5G network slice for the OT networked entities may be determined by searching a set of existing 5G network slices for attempting to identify an existing 5G network slice corresponding to the OT domain slice and, thus, configured to support the network requirements of the OT network elements at the locations of the OT networked entities. The set of existing OT domain slices, as indicated in FIG. 4, may be maintained as one or more deployed 5G network slice catalogues. If an existing 5G network slice corresponding to the OT domain slice is identified then the existing 5G network slice may be used to support communications of the OT networked entities in a manner that also would satisfy the network requirements of the OT domain network elements for the OT networked entities. If an existing 5G network slice corresponding to the OT domain slice is not identified then a new 5G network slice may be defined for use in supporting communications of the OT networked entities in a manner that also would satisfy the network requirements of the OT domain network elements for the OT networked entities. The new 5G network slice may be defined based on a 5G network slice template (e.g., a single template or a template selected from a set of available templates). The new 5G network slice may be defined based on a 5G network slice template by using the OT domain slice (e.g., the locations and network requirements of the OT domain network elements and, thus, the OT networked entities supported or to be supported by the OT domain network elements) to complete relevant portions of the 5G network slice template and form thereby the new 5G network slice. The new 5G network slice may be stored as part of an existing set of 5G network slices (e.g., a deployed 5G network slice catalogue) so as to be available for use in supporting OT domain to 5G network slice mapping for OT networked entities in the future.

The configuration of the OT domain and the 5G network domain for association of the OT domain slice with the 5G network slice for the OT networked entities may include determining and maintaining mappings of slice identifiers. The slice request may include a slice identifier of the OT domain slice, in which case the 5G network domain may maintain a mapping of the slice identifier of the OT domain slice to a slice identifier of the 5G network slice assigned for the OT networked entities. The 5G network domain, after associating the OT networked entities with the 5G network slice such that the 5G network slice can support communications of the OT networked entities, sends a slice response message to the OT network domain. The slice response message may include a slice identifier of the 5G network slice assigned for the OT networked entities, in which case the OT network domain may maintain a mapping of the slice identifier of 5G network slice to a slice identifier of the OT domain slice used to request the 5G network slice for the OT networked entities. The 5G slice identifiers may utilize any suitable type(s) of identifiers, such as Single - Network Slice Selection Assistance Information (S-NSSAI) or other suitable identifiers.

The transaction between the OT domain and the 5G network domain, including the slice request message and the slice response message, for association of the OT domain slice with the 5G network slice for the OT networked entities may be based on various interface types supported by the OT domain and the 5G network domain and associated functional elements supported by the 5G network domain. For example, the transaction between the OT domain and the 5G network domain may be based on a Standalone Non-Public Network (SNPN) capability, as indicated by the Communication Service Management Function (CSMF) SNPN Interface 461-S between the OT domain and the 5G network domain and the Network Slice Management Function (NSMF) SNPN element 462-S within the 5G network domain, in which case the set of existing 5G network slices may be maintained as a Deployed 5G Network Slices Catalogue 463-S associated with the NSMF SNPN element 462-S within the 5G network domain for the SNPN capability. For example, the transaction between the OT domain and the 5G network domain may be based on a Private NPN (PiNPN) capability, as indicated by the CSMF PiNPN Interface 461-P between the OT domain and the 5G network domain and the NSMF PiNPN element 462-P within the 5G network domain, , in which case the set of existing 5G network slices may be maintained as a Deployed 5G Network Slices Catalogue 463-P associated with the NSMF PiNPN element 462-P within the 5G network domain for the PiNPN capability. It will be appreciated that, although primarily presented with respect to example embodiments in which particular types of interfaces are used for transactions between the OT domain and the 5G network domain, various other types of interfaces also or alternatively may be used for transactions between the OT domain and the 5G network domain.

It will be appreciated that, although primarily presented with respect to a case in which configuration of a 5G network slice to support the OT networked entities is successful, it is possible that configuration of a 5G network slice to support the OT networked entities is unsuccessful. For example, the configuration of a 5G network slice to support the OT networked entities may be unsuccessful where none of the available 5G network slices is able to support the network requirements of the OT networked entities, where multiple 5G network slices are requested and only a subset of the requested multiple 5G network slices is able to be instantiated in the 5G network domain, or the like. In such cases in which configuration of a 5G network slice to support the OT networked entities is unsuccessful, an indication of a failure to configure a 5G network slice to support the OT networked entities (e.g., a 5G network slice configured to support the locations and network requirements of the OT networked entities could not be identified in the 5G network domain, a 5G network slice configured to support the locations and network requirements of the OT networked entities was identified in the 5G network domain but configuration of the 5G network slice to support the OT networked entities was unsuccessful, or the like) may be provided from the 5G network domain to the OT domain. In this case, the OT domain, based on the indication of the failure to configure a 5G network slice to support the OT networked entities, may initiate a new attempt to trigger configuration of a 5G network slice to support the OT networked entities (e.g., selecting a different existing OT domain slice, defining a new OT domain slice based on a different OT domain slice template, or the like).

It will be appreciated that, after completion of an attempt for configuration of a 5G network slice to support the OT networked entities (including sending of the slice request message from the OT domain to the 5G network domain and receipt of the slice response message at the OT domain from the 5G network domain), the OT domain may initiate further functions. For example, the OT domain may propagate further acknowledgment information (e.g., OK versus Not OK (NOK)) upstream within the OT domain 310, which may trigger further operations within the OT domain 310 (e.g., maintaining state information related to successful configuration of the 5G network slice to support the OT networked entities, reattempting configuration of the 5G network slice to support the OT networked entities in response to a failure of the previous attempt for configuration of a 5G network slice to support the OT networked entities, and so forth).

It will be appreciated that, although primarily presented with respect to use of specific types of associations using specific types of information for specifying or supporting various types of mappings (e.g., mappings of the locations and network requirements of the associated OT networked entities to OT domain slices, mappings of OT domain slices to 5G network slices, and so forth), various types of associations using various types of information may be used for specifying or supporting various types of mappings. For example, at least some associations may be considered to be explicit associations (e.g., based on specific information elements which are part of the OT domain network information model). For example, at least some associations may be considered to be implicit associations which may be part of the network plan and/or the OT domain network delta configuration (e.g., based on differentiation by L2 VLAN, L3 subnet, L3 policy, or the like, as well as various combinations thereof). It will be appreciated that various other types of associations using various other types of information may be used for specifying or supporting various other types of mappings.

It will be appreciated that, within the context of the process flow 400, various other functions may be performed by the OT domain and/or the 5G network domain for supporting slice configuration across the OT domain and the 5G network domain.

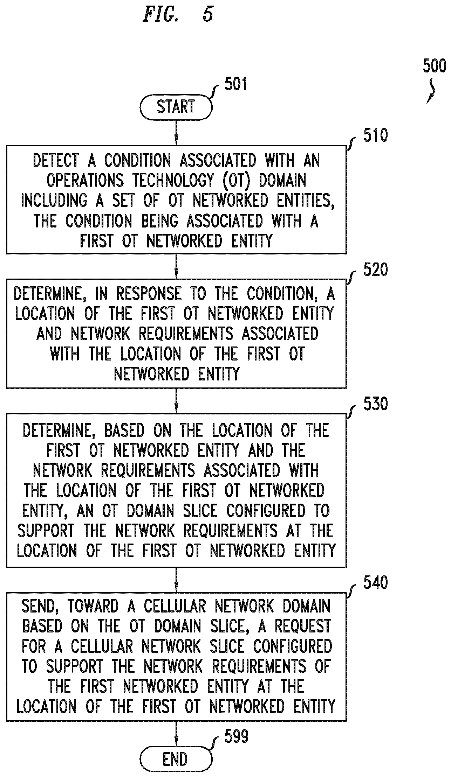

FIG. 5 depicts an example embodiment of a method for supporting slice configuration across an OT domain and a cellular network domain. It will be appreciated that, although primarily presented as being performed serially, at least a portion of the blocks of method 500 of FIG. 5 may be performed contemporaneously or in a different order than as presented in FIG. 5. At block 501, the method 500 begins. At block 510, detect a condition associated with an operations technology (OT) domain including a set of OT networked entities, the condition being associated with a first OT networked entity. At block 520, determine, in response to the condition, a location of the first OT networked entity and network requirements associated with the location of the first OT networked entity. At block 530, determine, based on the location of the first OT networked entity and the network requirements associated with the location of the first OT networked entity, an OT domain slice configured to support the network requirements at the location of the first OT networked entity. At block 540, send, toward a cellular network domain based on the OT domain slice, a request for a cellular network slice configured to support the network requirements at the location of the first OT networked entity. At block 599, the method 500 ends.

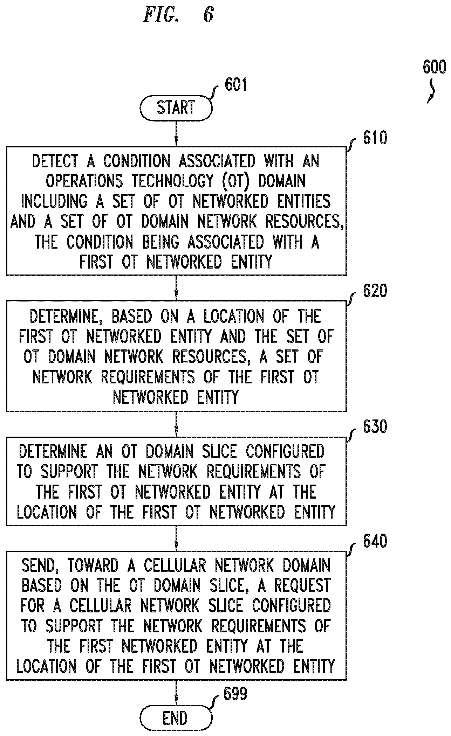

FIG. 6 depicts an example embodiment of a method for supporting slice configuration across an OT domain and a cellular network domain. It will be appreciated that, although primarily presented as being performed serially, at least a portion of the blocks of method 600 of FIG. 6 may be performed contemporaneously or in a different order than as presented in FIG. 6. At block 601, the method 600 begins. At block 610, detect a condition associated with an operations technology (OT) domain including a set of OT networked entities and a set of OT domain network resources, the condition being associated with a first OT networked entity. At block 620, determine, based on a location of the first OT networked entity and the set of OT domain network resources, a set of network requirements of the first OT networked entity. At block 630, determine an OT domain slice configured to support the set of network requirements of the first OT networked entity at the location of the first OT networked entity. At block 640, send, toward a cellular network domain based on the OT domain slice, a request for a cellular network slice configured to support the set of network requirements of the first OT networked entity at the location of the first OT networked entity. At block 699, the method 600 ends.

It will be appreciated that, although primarily presented herein with respect to example embodiments in which slice configuration is primarily supported within the OT domain (and based on interaction with the 5G network domain), various example embodiments may be configured such that slice configuration is primarily supported based on a separate OT/5G network adaptation, various example embodiments may be configured such that slice configuration is primarily supported within the 5G network domain (and based on interaction with the OT domain), or the like, as well as various combinations thereof.

It will be appreciated that various example embodiments presented herein may be configured to support various multi-vendor scenarios.

For example, various example embodiments presented herein may be configured to support different OT vendors. For example, where OPC/UA is used as the standard information model and protocol for multi-vendor integration, various example embodiments presented herein for slice configuration across OT and network domains may by applied below the OPC/UA network interface, although it will be appreciated that other implementations also may be used for supporting slice configuration across OT and network domains.

For example, various example embodiments presented herein may be configured to support different 5G network vendors.

Some examples of deployments which may utilize different 5G network vendors may include a deployment in which the RF, RAN, and Core elements may be from different vendors and deployed in a single campus / NPN deployment, a deployment in which multiple domain (e.g., RAN) vendors may be deployed in a large campus deployment or other type of deployment, or the like, as well as various combinations thereof. It will be appreciated that various example embodiments presented herein for supporting slice configuration across OT and network domains may enable use of slices as E2E multi-vendor network abstractions in these and other deployments.

Some examples of deployments which may utilize different 5G network vendors may include a deployment in which a single vendor (e2e) in a small campus deployment using a multi-vendor capable NM system, a deployment in which multiple locations (e.g., several campuses of a large enterprise using different RAN vendors) are managed by a central multi-vendor capable NM system, or the like, as well as various combinations thereof. It will be appreciated that various example embodiments presented herein for supporting slice configuration across OT and network domains may enable use of a uniform OT/5G network integration interface in these and other deployments, e.g., from an OT perspective single network vendor lock-in can be avoided (e.g., the network vendor can be swapped, but the NM system can be kept) and from a multi-vendor NMS vendor perspective such a system integrates with different underlying network vendors.

It will be appreciated that various example embodiments presented herein may be configured to support such multi-vendor scenarios in various other ways, may be configured to support other multi-vendor scenarios in these or various other ways, or the like, as well as various combinations thereof.

Various example embodiments for supporting communications management for an OT domain that uses an associated network domain for supporting communications of the OT domain may be configured to provide various advantages or potential advantages. For example, various example embodiments may be configured to leverage strong dependencies between the OT domain and the cellular network domain to provide improved flexibility of communications within the OT domain based on use of cellular network domain resources of the cellular network domain (e.g., given the anticipated fine slice granularity (with variable reliability requirements) and the associated many and frequent lifecycle operations, as well as strong dependencies of the OT domain and the cellular network domain including with respect to correlation of data contained in each of the domains), thereby enabling and even facilitating acceptance and use of 5G in an OT environment. For example, various example embodiments may be configured to enable a common logical abstraction of the OT domain system/network and the 5G cellular network, with the OT domain expressing per-location network requirements (e.g., network requirements such as QoS, isolation, prioritization, or the like, as well as various combinations thereof) and the 5G cellular network mapping such per-location network requirements to 5G network slice abstraction, thereby supporting adoption and use of the 5G cellular network to support communications of the OT domain. For example, various example embodiments may be configured to enable a common logical abstraction of the OT domain system/network and the 5G cellular network, with the OT domain expressing per-location network requirements (e.g., network requirements such as QoS, isolation, prioritization, or the like, as well as various combinations thereof) and the 5G cellular network mapping such per-location network requirements to 5G network slice abstraction, thereby establishing a baseline to put various network management capabilities (e.g., FCAPS, advanced network management capabilities, and so forth) on top of the common logical abstraction (e.g., the common cross-domain logical abstraction may be used to mutually expose data (e.g., raw data, FCAPS data / events, insights, and so forth) for various purposes which have meaningful cross-domain semantics (e.g., monitoring functions, anomaly detection functions which may include exposure of anomaly detection contexts and anomaly events, or the like, as well as various combinations thereof). For example, various example embodiments may be configured to leverage the unique characteristics of the OT integrated network environment (e.g., an enterprise environment or other environment which may have a common purpose of enabling a process (e.g., a manufacturing process or other process) where devices/UEs generally are an integral part of the environment and have significant common context (e.g., detailed AGV mobility, manufacturing planning schedules / reconfiguration, or the like) which can be exploited) as compared to a CSP environment (e.g., a public environment or other environment which generally may have relatively little management capabilities and common context) for the benefit of either or both of the OT domain and the 5G cellular network domain. Various example embodiments for supporting communications management for an OT domain that uses an associated network domain for supporting communications of the OT domain may be configured to provide various other advantages or potential advantages.

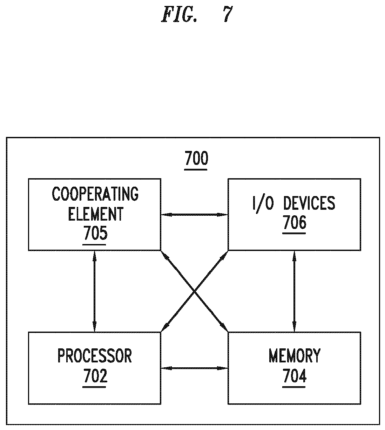

FIG. 7 depicts an example embodiment of a computer suitable for use in performing various functions presented herein.

The computer 700 includes a processor 702 (e.g., a central processing unit (CPU), a processor, a processor having a set of processor cores, a processor core of a processor, or the like) and a memory 704 (e.g., a random access memory, a read only memory, or the like). The processor 702 and the memory 704 may be communicatively connected. In at least some example embodiments, the computer 700 may include at least one processor and at least one memory including computer program code, wherein the at least one memory and the computer program code are configured to, with the at least one processor, cause the computer 700 to perform various functions presented herein.

The computer 700 also may include a cooperating element 705. The cooperating element 705 may be a hardware device. The cooperating element 705 may be a process that can be loaded into the memory 704 and executed by the processor 702 to implement various functions presented herein (in which case, for example, the cooperating element 705 (including associated data structures) can be stored on a non-transitory computer-readable storage medium, such as a storage device or other suitable type of storage element (e.g., a magnetic drive, an optical drive, or the like)).

The computer 700 also may include one or more input/output devices 706. The input/output devices 706 may include one or more of a user input device (e.g., a keyboard, a keypad, a mouse, a microphone, a camera, or the like), a user output device (e.g., a display, a speaker, or the like), one or more network communication devices or elements (e.g., an input port, an output port, a receiver, a transmitter, a transceiver, or the like), one or more storage devices (e.g., a tape drive, a floppy drive, a hard disk drive, a compact disk drive, or the like), or the like, as well as various combinations thereof.

It will be appreciated that computer 700 may represent a general architecture and functionality suitable for implementing functional elements described herein, portions of functional elements described herein, or the like, as well as various combinations thereof. For example, computer 700 may provide a general architecture and functionality that is suitable for implementing one or more elements presented herein, such as an OT networked entity or a portion there, an element providing OT domain network resources or a portion thereof, an OT domain controller or a portion thereof, an OT domain slice controller or a portion thereof, an element providing cellular network resources or a portion thereof, a cellular slice controller or a portion thereof, or the like, as well as various combinations thereof.

It will be appreciated that at least some of the functions presented herein may be implemented in software (e.g., via implementation of software on one or more processors, for executing on a general purpose computer (e.g., via execution by one or more processors) so as to provide a special purpose computer, and the like) and/or may be implemented in hardware (e.g., using a general purpose computer, one or more application specific integrated circuits, and/or any other hardware equivalents).

It will be appreciated that at least some of the functions presented herein may be implemented within hardware, for example, as circuitry that cooperates with the processor to perform various functions. Portions of the functions/elements described herein may be implemented as a computer program product wherein computer instructions, when processed by a computer, adapt the operation of the computer such that the methods and/or techniques described herein are invoked or otherwise provided. Instructions for invoking the various methods may be stored in fixed or removable media (e.g., non-transitory computer-readable media), transmitted via a data stream in a broadcast or other signal bearing medium, and/or stored within a memory within a computing device operating according to the instructions.

It will be appreciated that the term "non-transitory" as used herein is a limitation of the medium itself (i.e., tangible, not a signal) as opposed to a limitation of data storage persistency (e.g., RAM versus ROM).

It will be appreciated that, as used herein, "at least one of <a list of two or more elements>" and "at least one of the following: <a list of two or more elements>" and similar wording, where the list of two or more elements are joined by "and" or "or", mean at least any one of the elements, or at least any two or more of the elements, or at least all the elements.

It will be appreciated that, as used herein, the term "or" refers to a non-exclusive "or" unless otherwise indicated (e.g., use of "or else" or "or in the alternative").

It will be appreciated that, although various embodiments which incorporate the teachings presented herein have been shown and described in detail herein, those skilled in the art can readily devise many other varied embodiments that still incorporate these teachings.

## Claims

1. A method, comprising:
detecting (610) a condition associated with an operations technology, OT, domain including a set of OT networked entities and a set of OT domain network resources, the condition being associated with a first OT networked entity;
determining (620), based on a location of the first OT networked entity and the set of OT domain network resources, a set of network requirements of the first OT networked entity;
determining (630) an OT domain slice configured to support the set of network requirements of the first OT networked entity at the location of the first OT networked entity; and
sending (640), toward a cellular network domain based on the OT domain slice, a request for a cellular network slice configured to support the set of network requirements of the first OT networked entity at the location of the first OT networked entity.

2. The method according to claim 1, wherein the condition includes a condition which triggers a configuration of the OT domain or a reconfiguration of the OT domain.

3. The method according to any of claims 1 to 2, wherein the condition includes at least one of an addition of a new OT networked entity to the OT domain, a movement of an existing OT networked entity within the OT domain, a removal of an existing OT networked entity from the OT domain, or a change in a set of OT network resources of the OT domain.

4. The method according to any of claims 1 to 3, further comprising:
determining, based on a computation of an OT domain system delta configuration, the location of the first OT networked entity.

5. The method according to claim 4, wherein the computation of the OT domain system delta configuration is based on a current OT domain system configuration and the condition associated with the OT domain.

6. The method according to any of claims 1 to 5, wherein the location of the first OT networked entity includes a native cellular location or area or a combined cellular and time sensitive networking location or area.

7. The method according to any of claims 1 to 6, wherein determining the set of network requirements of the first OT networked entity comprises:
determining, from the set of OT domain network resources based on the location of the first OT networked entity, a subset of OT domain network resources associated with the location of the first OT networked entity;
determining, based on the subset of OT domain network resources associated with the location of the first OT networked entity, a set of network requirements of the location of the first OT networked entity; and
determining, based on the set of network requirements of the location of the first OT networked entity, the set of network requirements of the first OT networked entity.

8. An apparatus (700), comprising:
means (702) for detecting a condition associated with an operations technology, OT, domain including a set of OT networked entities and a set of OT domain network resources, the condition being associated with a first OT networked entity;
means (702) for determining, based on a location of the first OT networked entity and the set of OT domain network resources, a set of network requirements of the first OT networked entity;
means (702) for determining an OT domain slice configured to support the set of network requirements of the first OT networked entity at the location of the first OT networked entity; and
means (702) for sending, toward a cellular network domain based on the OT domain slice, a request for a cellular network slice configured to support the set of network requirements of the first OT networked entity at the location of the first OT networked entity.

9. The apparatus (700) according to claim 8, wherein the condition includes a condition which triggers a configuration of the OT domain or a reconfiguration of the OT domain.

10. The apparatus (700) according to any of claims 8 to 9, wherein the condition includes at least one of an addition of a new OT networked entity to the OT domain, a movement of an existing OT networked entity within the OT domain, a removal of an existing OT networked entity from the OT domain, or a change in a set of OT network resources of the OT domain.

11. The apparatus (700) according to any of claims 8 to 10, further comprising:
means (702) for determining, based on a computation of an OT domain system delta configuration, the location of the first OT networked entity.

12. The apparatus (700) according to claim 11, wherein the computation of the OT domain system delta configuration is based on a current OT domain system configuration and the condition associated with the OT domain.

13. The apparatus (700) according to any of claims 8 to 12, wherein the location of the first OT networked entity includes a native cellular location or area or a combined cellular and time sensitive networking location or area.

14. The apparatus (700) according to any of claims 8 to 13, wherein the means for determining the set of network requirements of the first OT networked entity comprises:
means (702) for determining, from the set of OT domain network resources based on the location of the first OT networked entity, a subset of OT domain network resources associated with the location of the first OT networked entity;
means (702) for determining, based on the subset of OT domain network resources associated with the location of the first OT networked entity, a set of network requirements of the location of the first OT networked entity; and
means (702) for determining, based on the set of network requirements of the location of the first OT networked entity, the set of network requirements of the first OT networked entity.

15. A non-transitory computer-readable medium storing computer program code configured to cause an apparatus to at least:
detect (610) a condition associated with an operations technology, OT, domain including a set of OT networked entities and a set of OT domain network resources, the condition being associated with a first OT networked entity;
determine (620), based on a location of the first OT networked entity and the set of OT domain network resources, a set of network requirements of the first OT networked entity;
determine (630) an OT domain slice configured to support the set of network requirements of the first OT networked entity at the location of the first OT networked entity; and
send (640), toward a cellular network domain based on the OT domain slice, a request for a cellular network slice configured to support the set of network requirements of the first OT networked entity at the location of the first OT networked entity.
